# EUROPEAN PATENT APPLICATION

(11) **EP 4 848 499 A1**
(43) Date of publication of application: **02.12.2026**
(21) Application number: 25179886.4
(22) Date of filing: 30.05.2025
(51) Int. Cl.: H01S 3/036, H01S 3/00, H01S 3/223

(54) **OPTICAL AMPLIFIER, LITHOGRAPHY SYSTEM AND METHOD FOR TRAPPING PARTICLES IN AN OPTICAL AMPLIFIER**

(71) Applicant: TRUMPF Lasersystems for Semiconductor Manufacturing SE, 71254 Ditzingen (DE); ASML Netherlands B.V., 5500 AH Veldhoven (NL)
(72) Inventor: SCHWEIKERT, Sven, 71229 Leonberg (DE); WIESWEG, Florian, 70806 Kornwestheim (DE); DILISSEN, Ruben Hendrik C, 70439 Stuttgart (DE); ALVAREZ, Diego, 70173 Stuttgart (DE); SCHÖNLEBER, Christoph, 70771 Leinfelden-Echterdingen (DE)
(74) Representative: Kutzenberger Wolff & Partner

(57) **Abstract**

The present invention concerns an optical amplifier (2) for amplifying laser radiation (11) comprising a cavity (20) filled with a laser active gas, wherein the cavity (20) comprises a gas circulation space (21) configured for circulating the laser active gas, a particle collection space (23) and a particle trapping wall (22) that is arranged between the gas circulation space (21) and the particle collection space (23), wherein the particle trapping wall (22) comprises a plurality of holes (24) for letting pass particles (15) to be trapped in the particle collection space (23).

## Description

The invention concerns an optical amplifier for amplifying laser radiation of the type comprising a cavity filled with a laser active gas, in other words, a gaseous laser active medium. The invention further concerns a lithography system, in particular an extreme ultraviolet lithography system. The invention further concerns a method for trapping particles in an optical amplifier for amplifying laser radiation comprising a cavity filled with a laser active gas.

The invention can be applied in the field of drive laser systems for use in extreme ultraviolet (EUV) lithography. Those drive laser systems typically include a laser source for generating pulsed laser radiation and several optical amplifiers for amplifying the pulsed laser radiation. Generally, the optical amplifiers include cavities that are filled with a laser active gas, e.g., a mixture comprising CO₂, N₂ and He. The laser active gas may be excited by radio-frequency (RF) signals applied to the laser active gas using electrodes.

Optical components, e.g., mirrors are employed to guide the laser radiation from one cavity to the other. Those optical components are, however, sensitive for particle contamination. Contamination can occur when the system is opened, e.g., for maintenance but also during normal operation of the drive laser. Particle contamination can reduce the lifetime of the mirrors when accumulating on the surface and creating hotspots which potentially cause performance impact due to local thermal lensing or in a further stage burns hence damaging the mirror. Additionally, the reflection of the mirror can decrease leading to a lower output power of the optical amplifier.

To mitigate this, optical amplifiers typically include particle traps comprising a thin layer of grease that is installed near a location of gas flow deflection. When the particles encounter the grease layer, they get retained at it preventing them from circulating further through the system and therefore contaminating and damaging the mirrors. Known particle traps use a thin layer of grease to collect particles. The drawbacks of particle traps using grease are diverse. Grease traps can only be installed on horizontal surfaces as the grease is susceptible to unwanted creeping if arranged on an inclined surface. Grease further comes with the problem of outgassing which may contaminate the optical amplifier, especially at high temperatures. Grease traps may be messy to install by an operator leading to contamination on other components. Generally, grease traps are limited to a specific temperature range which is low enough to prevent high outgassing and limit the viscosity, but not too low to lose effectiveness due to too low viscosity or stickiness and damping behaviour. Grease typically requires replacing the traps from time to time as particles cannot be extracted. The known grease traps generally contain some form PFAS. When particles hit the grease there is the risk that small droplets of grease loosen and get introduced in the system. Grease traps are highly dependent on the thickness of the grease layer resulting in high variation between different systems. Cleanly separating particles from the grease is complicated for detailed analysis of materials or size/amount. Finally, the position for typically bulky online monitoring devices is limited to close to the grease.

Against this background, the problem underlying the invention is to avoid the disadvantages of grease-based particle traps in optical amplifiers.

According to an aspect of the invention , an optical amplifier for amplifying laser radiation is provided, comprising a cavity filled with a laser active gas, wherein the cavity comprises a gas circulation space configured for circulating the laser active gas, a particle collection space and a particle trapping wall that is arranged between the gas circulation space and the particle collection space, wherein the particle trapping wall comprises a plurality of holes for letting pass particles to be trapped in the particle collection space.

In the inventive optical amplifier, the plurality of holes of the particle trapping wall enable to trap particles in the laser active gas without the need for grease. Thus, an optical amplifier having a greaseless particle trap may be accomplished. The greaseless particle trap may mitigate particle contamination in the optical amplifier without the disadvantages of deploying grease in the cavity. Outgassing can be prevented and operation of the optical amplifier is not limited by an operational temperature range of the grease. The greaseless particle trap further required reduced maintenance efforts and enables particle extraction during operation of the amplifier and online particle monitoring.

The laser active gas may comprise CO₂ and/or N₂ and/or He. Preferably, the laser active gas is a gas composition comprising CO₂, N₂ and He. The laser active gas may be circulated in a closed loop within the optical amplifier. The optical amplifier may include devices for circulating and/or cooling and/or exciting and/or refreshing the laser active gas in the gas circulation space inside the cavity.

According to a preferred embodiment of the invention, the holes comprise a truncated cone shaped segment. By providing holes with truncated cone shaped segments, the risk can be reduced that particles which passed through one of the holes of the particle trapping wall and reached the particle collection space get back to the gas circulation space. Thus, the possibility of trapping particles in the particle collection space can be increased. Particle trapping performance is improved. Preferably, the holes of the particle trapping wall are truncated cone shaped holes.

According to a preferred embodiment of the invention, the truncated cone shaped segment tapers towards the particle collection space. In other words, the holes comprise a first cross-sectional area adjacent the gas circulation space and a second cross-sectional area adjacent the collection space, wherein the first cross-sectional area is larger than the second cross-sectional area.

According to a preferred embodiment of the invention, the holes comprise a cylindrical segment, wherein the cylindrical segment is arranged adjacent the particle collection space. Thus, the cylindrical segment is arranged between the collection space and the truncated cone segment of the respective hole. The holes may comprise both, a truncated cone shaped segment and a cylindrical segment. If so, the truncated cone shaped segment may be arranged adjacent the gas circulation space and the cylindrical segment may be arranged adjacent the collection space.

According to a preferred embodiment of the invention, the particle collection space is arranged below the particle trapping wall in a direction of gravity. This embodiment has the advantage, that particles may be forced through one of the holes into the collection space by the force of gravity.

According to a preferred embodiment of the invention, the particle trapping wall is arranged essentially horizontally. It is, however, not required to arrange the trapping wall exactly horizontally. In contrast, the particle trapping wall may be arrange tilted with respect to a horizontal plane. As long as the collection space is arranged below the particle trapping wall it will be possible to attract particles through the holes to the collection space by the force of gravity.

According to a preferred embodiment of the invention, the particle collection space comprises an extraction duct for extracting trapped particles from the particle collection space. The extraction duct may be connected to a suction device that is configured to draw off the particles from the collection space, either continuously or intermittently, for example periodically.

According to a preferred embodiment of the invention, the optical amplifier comprises a gas circulation device, preferably a gas pump, for circulating the laser active gas in the gas circulation space of the cavity. The gas circulation device helps to refresh laser active gas in the cavity so that amplification efficiency of the optical amplifier is increased.

According to a preferred embodiment of the invention, the gas circulation space includes a corner segment configured to direct an essentially horizontal flow of laser active gas in a downward direction through an opening of a downpipe, wherein the particle trapping wall is arranged at a lower level than the opening of the downpipe. This embodiment provides an undercut situated between the downpipe and the particle trapping wall which reduces the probability that particles re-enter the flow of laser active gas through the downpipe if they already have been located in the region next to, in particular in the region above, the particle trapping wall.

According to a preferred embodiment of the invention, the optical amplifier includes a bouncing surface arranged above the particle trapping wall, wherein the bouncing surface and the particle trapping wall enclose an angle in the range of 15° to 60°, preferably of 45°. The bouncing surface facilitates redirecting particles towards the particle trapping surface. The angels in the indicated ranges increase the probability that particles that hit the bouncing surface in an essentially horizontal direction are deflected towards the particle trapping surface.

According to another aspect of the **invention**, a lithography system, in particular extreme ultraviolet lithography system, is provided comprising a drive laser with an optical amplifier as disclosed before.

According to another aspect of the invention , a method for trapping particles in an optical amplifier for amplifying laser radiation is provided comprising a cavity filled with a laser active gas, wherein the cavity comprises a gas circulation space in which the laser active gas is circulated, and a particle collection space and a particle trapping wall that is arranged between the gas circulation space and the particle collection space, wherein particles pass through a plurality of holes of the particle trapping wall and get trapped in the particle collection space

The method may provide the same technical benefits and advantages as the inventive optical amplifier. Thus, reference is made to the respective description relating to the inventive optical amplifier.

According to a preferred embodiment of the invention, particles are extracted from the particle collection space, wherein the extracted particles are detected by a particle sensor. The particles are preferably extracted through an extraction duct connected to the collection space. Extraction may be carried out continuously or intermittently, preferably periodically. The extraction duct may be connected to a suction device that draws off the particles from the particle collection space, for example a vacuum pump. The particle sensor may be an optical sensor or a chemical sensor.

According to a preferred embodiment of the invention, the extracted particles are detected in an operation mode in which the optical amplifier amplifies laser radiation. By monitoring the screen in normal operation of the optical amplifier, service activities can be scheduled if contamination is detected, e.g., if contamination above a predetermined maximum value is detected.

According to a preferred embodiment of the invention, the particle sensor determines a rate of trapped particles per unit of time, optionally wherein a control signal is generated and/or monitoring the surface is stopped when the rate falls below a predetermined minimum rate value. The rate of trapped particles per unit of time is a suitable parameter to consider in order to evaluate the current particle contamination in the cavity. Typically, lower rates of particles trapped per unit time indicate that the particle contamination inside the cavity is lower than in a scenario where a higher rate of particles trapped per unit time is detected. Optionally, a control signal is generated and/or monitoring is stopped when the rate falls below a predetermined minimum rate value. For example, a cleaning run can be stopped as soon as such control signal is generated because the particle contamination is considered to be sufficiently low.

According to a preferred embodiment of the invention, the particle sensor determines a rate of trapped particles per unit of time, wherein a warning signal is generated and/or an emergency shutdown is initiated when the rate rises above a predetermined maximum rate value. As explained before, the rate of trapped particles per unit of time is a suitable parameter to consider in order to evaluate the current particle contamination in the cavity. In normal operation, the particle contamination should not rise above a critical condition value, here the predetermined maximum rate. Thereby, damages to the system can be avoided and maintenance can be pro-actively scheduled.

Alternatively, or additionally, the advantageous embodiments and features disclosed in combination with the inventive optical amplifier can, alone or in combination, be applied to the inventive method.

Further details and advantages of the invention will be elucidated in the following using the embodiments shown in the figures.
- Fig. 1: depicts a block diagram of an embodiment of an extreme ultraviolet lithography system according to the invention;
- Fig. 2: depicts schematic drawing of a corner segment of an optical amplifier according to an embodiment of the invention;
- Fig. 3: a cross-sectional perspective view of a particle trapping wall and a collection space of an optical amplifier according to an embodiment of the invention; and
- Fig. 4: a perspective view of a corner segment of an optical amplifier according to an embodiment of the invention.

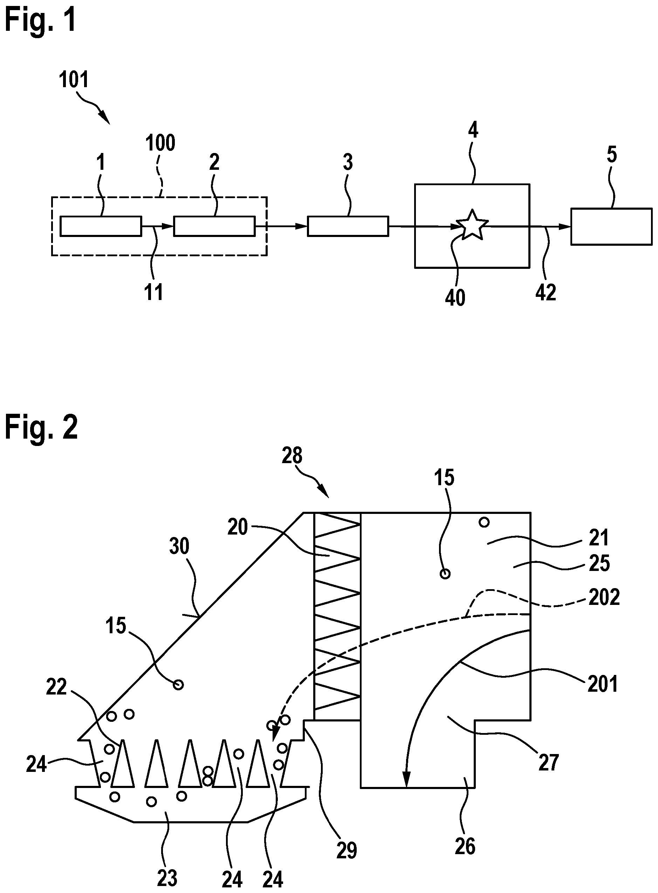

The embodiment in **Fig. 1** shows an extreme ultraviolet, EUV, lithography system 101 with a device 2 for amplifying laser radiation 11 according to an embodiment example of the invention. The EUV lithography system 101 comprises at least one radiation source 1, by means of which, in particular pulsed, laser radiation 11 can be generated. Even if only one radiation source 1 is shown here, two radiation sources 1 can be provided, for example to generate pre-pulses and main pulses of the laser radiation 11, which each follow one another in short succession and are focussed on a target area 40.

A further component of the EUV lithography system 101 is an optical amplifier 2 for amplifying laser radiation, by means of which the laser radiation 11 generated by the radiation source 1 is optically amplified. Both, the radiation source 1 and the optical amplifier 2 can together be understood to form a drive laser 100. The amplified laser radiation 11 is then fed to a focussing device 3, which focusses the laser radiation 11 onto a target area 40. A target material is arranged in the target area, which emits EUV radiation when irradiated with the laser radiation.

According to the exemplary embodiment, the target area 40 is arranged in a target chamber 4 in which vacuum conditions prevail. The target material can be tin, for example, which is provided in drop form. The tin droplet can be heated by a pre-pulse, for example pulsed laser radiation 11 with a wavelength of 10.2 µm, so that the tin droplet is expanded, vaporised, ionised and/or a weak or possibly strong plasma is generated. A main pulse briefly following the pre-pulse, for example pulsed laser radiation 11 with a wavelength of 10.6 µm, can transfer the essential part of the material influenced by the pre-pulse into the plasma state, whereby the EUV radiation 42 is generated. This EUV radiation 42 is then fed to an exposure device 5 of the lithography system 101, in which the EUV radiation 42 can be used to expose semiconductor substrates.

According to a variation of the embodiment shown in Fig. 1, the pre-pulse and the main pulse are generated by two separate lasers. According to this variation, the laser radiation of the pre-pulse is pulsed laser radiation with a wavelength of 1 µm. Said 1 µmlaser radiation is coupled to the focussing unit 3 so as to feed the 1 micron laser radiation into the focussing unit 3.

Fig. 2 shows a part of an optical amplifier 2 that can be used in the lithography system 101 described with reference to Fig. 1 for amplifying laser radiation 11 generated by the radiation source 1. The optical amplifier 2 comprises a cavity 20 filled with a laser active gas. The laser active gas preferably comprises CO₂ and N₂ and He. To prevent overheating, the laser active gas is circulated in a cooling loop which preferably comprises a compressor and a gas cooler. In Fig. 2, a corner segment 28 of a gas circulation space 21 of the cavity 20 of the optical amplifier 2 is depicted, where an essentially horizontal flow of laser active gas is redirected in a downward direction. The flow direction of the laser active gas is indicated by arrow 201. The corner segment 28 comprises a horizontal duct 25 and a downpipe 26 that is connected to the horizontal duct 25 via an opening 27 of the downpipe 26.

Typically, optical components, like mirrors and windows are located at specific positions inside the cavity 20. In normal operation, those optical components serve to guide the laser radiation 11 through the optical amplifier 2 towards the downstream focussing device 3.

In order to enhance the availability of the optical amplifier 2, the optical amplifier 2 according to the embodiment of the invention comprises means for trapping particles 15 entrained in the flow of laser active gas. Those means comprise a particle trapping wall 22 that is located besides the downpipe 26. Due to their inertia, particles 15 entrained in the gas flow will follow a trajectory, as indicated by arrow 202, that is curved less than the trajectory of the laser active gas according to arrow 201. The particles 15 will thus be directed towards the particle trapping wall 22. The particle trapping wall 22 is arranged at a lower level than the opening 27 of the downpipe 26. A sidewall that is arranged perpendicular to the particle trapping wall 22 provides a step. Thus, the particle trapping wall 22 is arranged in an undercut cavity so that the chance that particles situated above the particle trapping wall 22 get back to the gas flow and enter the opening 27 of the downpipe 26 is reduced.

The means for particle trapping further comprise a particle collection space 23 situated below the particle trapping wall 22. In other word, the particle trapping wall 22 is arranged between the gas circulation space 21 and the particle collection space 23. To allow particles 15 to pass from the gas circulation space 21 to the particle collection space 23, the particle trapping wall 22 comprises a plurality of holes 24. As there is no or only a very limited flow of gas inside the particle collection space 23, the particles 15 will be trapped inside the particle collection space 23.

The holes 24 of the particle trapping wall 22 include a truncated cone shaped segment. The holes are implemented such that the truncated cone shaped segment of the holes tapers towards the particle collection space. Thus, the diameter of the holes decreases starting from the gas circulation space 22 towards the particle collection space 23. By this, the risk that particles 15 captured in the particle collection space 23 get back to the gas circulation space 22 is further reduced. In the embodiment shown in Fig. 2, the holes are completely formed as truncated cones.

In the embodiment shown in Fig. 2, the particle trapping wall 2 is arranged essentially horizontally. However, it is not required to arrange the particle trapping wall 2 exactly horizontally. In contrast, the particle trapping wall 2 may be inclined with respect to the horizontal direction as long as the particle collection space 23 is arranged below the particle trapping wall 22. Due to the gravitational force, particles impinging one of the holes 24 of the particle trapping wall 22 will nevertheless be forced downwards to the particle collection space 23.

The embodiment of Fig. 2 further includes a bouncing surface 30 arranged above the particle trapping wall 22 which allows particles 15 to be deflected towards the particle trapping wall 22. The bouncing surface 30 and the particle trapping wall 22 preferably enclose an angle in the range of 15° to 60°, for example an angle of 45°.

According to a variation of the embodiment shown in Fig. 2, the particle collection space 23 may comprise an extraction duct for extracting trapped particles from the particle collection space.

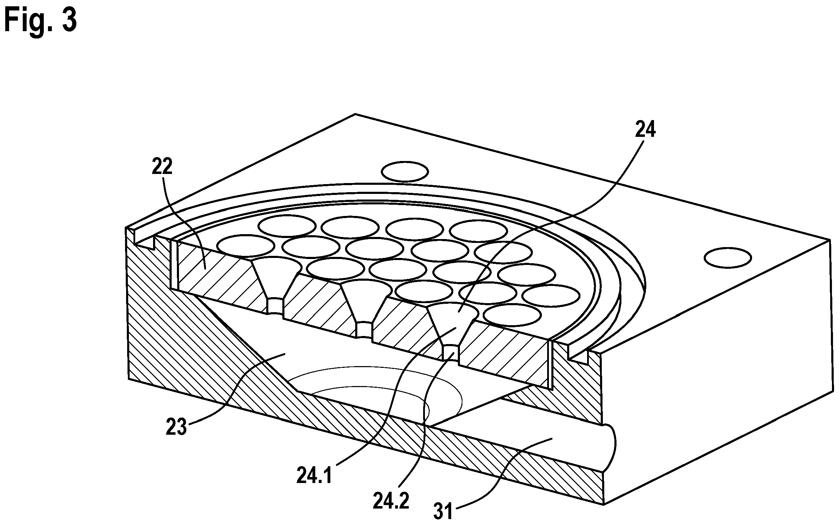

**Fig. 3** depicts a cross-sectional perspective view of a particle trapping wall 22 and a collection space 23 of an optical amplifier 2 according to another embodiment of the invention. The particle trapping wall 22 includes multiple holes 24 that allow particles to pass from above the particle trapping wall 22 to the collection space 23 arranged below the particle trapping wall 22. Each hole 24 comprises a truncated cone shaped segment 24.1 and a cylindrical segment 24.2. The truncated cone shaped segment 24.1 is arranged above the cylindrical segment and tapers towards the particle collection space 23. The cylindrical segment 24.2 is arranged below the truncated cone shaped segment 24.1 and adjacent the particle collection space 23.

The particle collection space 23 comprises an extraction duct 31 for extracting trapped particles from the particle collection space. Extraction may be carried out continuously or intermittently, preferably periodically. The extraction duct 31 may be connected to a suction device that draws off the particles from the particle collection space 23, for example a vacuum pump. A particle sensor may be provided for detecting particles in the particle collection space 23 or when drawn of through the extraction duct 31.

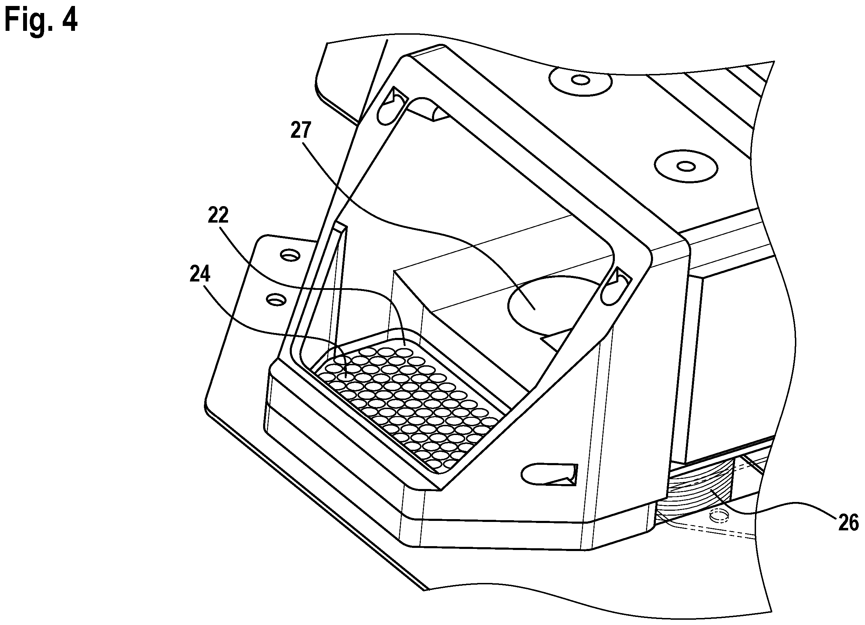

**Fig.4** depicts a perspective view of a corner segment of an optical amplifier 2 according to yet another embodiment of the invention. Here, the bouncing surface is removed to show the interior of the cavity 20. Below the opening provided by the removed bouncing surface, the particle trapping wall 22 is visible including a plurality of holes 24. Next to the particle trapping wall 22, a step 29 is visible that is situated between the particle trapping wall 22 and an opening 26 of the downpipe 27.

The embodiments of optical amplifiers 2 described before each comprise a cavity 20 filled with a laser active gas, wherein the cavity 20 comprises a gas circulation space 21 configured for circulating the laser active gas, a particle collection space 23 and a particle trapping wall 22 that is arranged between the gas circulation space 21 and the particle collection space 23, wherein the particle trapping wall 22 comprises a plurality of holes 24 for letting pass particles 15 to be trapped in the particle collection space 23. Those optical amplifiers 2 avoid the disadvantages of a grease-based particle traps in optical amplifiers as known in the prior art.

### Reference Signs:

- 1: laser radiation source
- 2: optical amplifier
- 3: focussing device
- 4: target chamber
- 5: exposure device
- 11: laser radiation
- 15: particle

- 20: cavity
- 21: gas circulation space
- 22: particle trapping wall
- 23: particle collection space
- 24: hole
- 24.1: truncated cone shaped segment
- 25: horizontal duct
- 26: downpipe
- 27: opening of downpipe
- 28: corner segment
- 29: step
- 30: bouncing surface
- 31: extraction duct

- 40: target area
- 42: EUV radiation
- 100: drive laser
- 101: EUV system

- 201: gas flow direction
- 202: particles flow direction

## Claims

1. Optical amplifier (2) for amplifying laser radiation (11) comprising a cavity (20) filled with a laser active gas, wherein the cavity (20) comprises a gas circulation space (21) configured for circulating the laser active gas,
**characterized by** a particle collection space (23) and a particle trapping wall (22) that is arranged between the gas circulation space (21) and the particle collection space (23), wherein the particle trapping wall (22) comprises a plurality of holes (24) for letting pass particles (15) to be trapped in the particle collection space (23).

2. Optical amplifier (2) according to claim 1, **characterized in that** the holes (24) comprise a truncated cone shaped segment (24.1).

3. Optical amplifier (2) according to claim 2, **characterized in that** the truncated cone shaped segment (24.1) tapers towards the particle collection space (23).

4. Optical amplifier (2) according to any of claims 2 or 3, **characterized in that** the holes (24) comprise a cylindrical segment (24.2), wherein the cylindrical segment (24.2) is arranged adjacent the particle collection space (23).

5. Optical amplifier (2) according any of the preceding claims, **characterized in that** the particle collection space (23) is arranged below the particle trapping wall (22) in a direction of gravity.

6. Optical amplifier (2) according any of the preceding claims, **characterized in that** the particle trapping wall (22) is arranged essentially horizontally.

7. Optical amplifier (2) according any of the preceding claims, **characterized in that** the particle collection space (23) comprises an extraction duct (31) for extracting trapped particles from the particle collection space (23).

8. Optical amplifier (2) according to any of the preceding claims, **characterized by** a gas circulation device, preferably a gas pump, for circulating the laser active gas in the gas circulation space (21) of the cavity (20).

9. Optical amplifier (2) according to any of the preceding claims, **characterized in that** the gas circulation space (21) includes a corner segment (28) configured to direct an essentially horizontal flow of laser active gas in a downward direction through an opening (27) of a downpipe (26), wherein the particle trapping wall (22) is arranged at a lower level than the opening (27) of the downpipe (26).

10. Optical amplifier (2) according to any of the preceding claims, **characterized by** a bouncing surface (30) arranged above the particle trapping wall (22), wherein the bouncing surface (30) and the particle trapping wall (22) enclose an angle in the range of 15° to 60°, preferably of 45°.

11. Lithography system (101), in particular extreme ultraviolet lithography system, comprising a drive laser (100) with an optical amplifier (2) according to any of the preceding claims.

12. Method for trapping particles in an optical amplifier (2) for amplifying laser radiation (11) comprising a cavity (20) filled with a laser active gas, wherein the cavity (20) comprises a gas circulation space (21) in which the laser active gas is circulated, and a particle collection space (23) and a particle trapping wall (22) that is arranged between the gas circulation space (21) and the particle collection space (23), wherein particles pass through a plurality of holes (24) of the particle trapping wall (22) and get trapped in the particle collection space (23).

13. Method according to claim 12, **characterized in that** particles are extracted from the particle collection space (23), wherein the extracted particles are detected by a particle sensor.

14. Method according to claim 13, **characterized in that** the extracted particles are detected in an operation mode in which the optical amplifier (2) amplifies laser radiation.

15. Method according to any of claims 13 or, **characterized in that** the particle sensor determines a rate of trapped particles per unit of time, optionally wherein a control signal is generated and/or monitoring the surface is stopped when the rate falls below a predetermined minimum rate value; and/or
**in that** the particle sensor determines a rate of trapped particles per unit of time, wherein a warning signal is generated and/or an emergency shutdown is initiated when the rate rises above a predetermined maximum rate value.
